# DEMANDE DE BREVET EUROPEEN

(11) **EP 0 702 498 A1**
(43) Date de publication de la demande: **20.03.1996**
(21) Numéro de dépôt: 95402061.6
(22) Date de dépôt: 12.09.1995
(51) Int. Cl.: H04Q 7/20, H04Q 7/38

(54) **Réseau de radiocommunications cellulaire multicouche avec cellule sans fréquence balise**

(30) Priorité: 14.09.1994 FR 9410972
(71) Demandeur: ALCATEL MOBILE COMMUNICATION FRANCE, F-75008 Paris (FR)
(72) Inventeur: Dupuy, Pierre, F-75017 Paris (FR)
(74) Mandataire: Pothet, Jean Rémy Emile Ludovic

(57) **Abrégé**

L'invention fournit un procédé d'établissement d'un canal dédié (TCH, SDCCH) entre un mobile (M) et une station de base (Sj) dans un système cellulaire multicouche de radiocommunications avec des mobiles. Le procédé comprend les étapes de
- réception (E1) par chacune de stations de base de microcellule (S1,...,S13), d'un message d'accès (AB) émis par le mobile sur ladite fréquence balise (BCCH),
- sélection (E2) de l'une (Sj) desdites stations de base comme définissant une couverture radioélectrique à laquelle appartient le mobile (M), en fonction de mesures de niveau de réception dudit message d'accès (AB), et
- émission (E3) par ladite station de base (SP) de cellule parapluie (CP) sur ladite fréquence balise (BCCH) à destination dudit mobile (M), d'un message d'allocation ([SDCCH]; [TCH]) identifiant le canal dédié (SDCCH, TCH) qui est disponible dans la station de base (Sj, SP) sélectionnée.

## Description

La présente invention concerne de manière générale un réseau, ou système, cellulaire de radiocommunications avec des mobiles et plus particulièrement un système cellulaire multicouche constitué d'une pluralité de microcellules d'une part, et d'une cellule parapluie à couverture radioélectrique couvrant la pluralité de microcellules, d'autre part. L'invention vise notamment à fournir un procédé de transfert de microcellule à microcellule de la communication ainsi établie dans un tel système cellulaire multicouche au sein duquel aucune microcellule n'utilise une fréquence balise. L'invention trouve application notamment dans le réseau cellulaire numérique G.S.M (Global System for Mobile Communications).

Le brevet américain US-A-4 723 266 (Perry) décrit un système cellulaire multicouche dans lequel les phases d'établissement de communication avec un mobile sont gérées par la cellule parapluie, dans l'objectif de réduire le nombre de canaux de contrôle dans chaque microcellule.

Un message de demande d'établissement de communication émis par un mobile est reçu, dans un canal de contrôle, par une station de base associée à la cellule parapluie. En réponse à la réception de ce message, la station de base de la cellule parapluie alloue au mobile à travers le canal de contrôle, un canal de trafic temporaire pour la communication demandée. Ce canal de trafic temporaire est établi entre la station de base de cellule parapluie et le mobile, et temporairement la communication demandée établie est véhiculée à travers ce canal de trafic. Chaque microcellule inclut un récepteur additionnel pour recevoir et mesurer un niveau de puissance dans le canal de trafic temporaire véhiculant cette communication. Des mesures sont ainsi remontées par toutes les microcellules vers un équipement d'infrastructure du réseau. Cet équipement d'infrastructure sélectionne celle des microcellules qui reçoit le signal de la communication véhiculée dans le canal de trafic temporaire, avec une puissance maximale. Cette microcellule sélectionnée est la microcellule la plus proche du mobile, et la communication est commutée du canal de trafic temporaire vers un canal de trafic courant associé à cette microcellule sélectionnée. Cette commutation, ou transfert de cellule à cellule, ou encore handover, de la communication est précédée par une phase d'échange de messages de signalisation avec le mobile à travers le canal de trafic temporaire afin de signaler au mobile le nouveau canal, dit canal courant, qui est alloué à la communication.

Dans le cadre notamment d'un réseau GSM, le brevet précité présente deux inconvénients principaux.

En ce qui concerne le premier inconvénient, ce document ne traite pas de handover inter-microcellule. On rappelle qu'une fréquence balise dans le GSM est émise en continu par une cellule donnée et véhicule les canaux BCCH (BroadCast CHannel) et CCCH (Common Control Channel). Le canal BCCH transporte notamment des bursts de synchronisation fréquentielle et temporelle. Le BCCH est en outre utilisé, lors d'une phase de préparation à un changement de cellule, ou handover, à des fins de détermination par mesure de puissance par le mobile de la cellule à laquelle il appartient. Le canal CCCH, qui est un canal bidirectionnel, comprend un canal montant, dans le sens mobile vers réseau, destiné à recevoir des messages d'appel en provenance des mobiles, et un canal descendant dans le sens réseau vers mobile, destiné à émettre des messages d'appel à destination des mobiles. Il apparaît préférable de supprimer toutes les fréquences balises de microcellule et utiliser une unique fréquence balise de couverture parapluie. Une telle réalisation induit un gain considérable en termes de réutilisation de fréquence. En effet, l'utilisation d'une fréquence balise générée de manière continue dans une microcellule empêche l'utilisation de cette même fréquence dans une microcellule voisine. Par contre, la technique de saut de fréquence (frequency hoping) autorise une utilisation d'une même fréquence qui est générée de façon sporadique dans des cellules voisines, car cette technique apporte un gain statistique significatif selon le principe dit de diversité d'interférence, tel qu'expliqué dans le document "The GSM-Global System For Mobile Communications" produit et publié par M. MOULY et M. B Pautet, Edition 1992, pages 218-233. Les séquences de saut de fréquence conduisent à une faible probabilité d'interférence de canaux de même fréquence dans des cellules voisines.

En ce qui concerne le second inconvénient, le brevet américain précité propose une solution technique non optimale selon laquelle la communication est véhiculée temporairement dans un canal associé à la cellule parapluie, préalablement à son transfert sur un canal de trafic de microcellule. Il apparaît plus opportun, dans la mesure où toutes les conditions sont remplies, d'établir directement une communication dans un canal associé à la microcellule à laquelle appartient un mobile plutôt que d'utiliser temporairement un canal de trafic de cellule parapluie tel que décrit dans le brevet américain étudié.

On connaît par ailleurs, par le document de brevet EP-0 504 122, un procédé de transfert d'une première station de base de microcellule vers une seconde station de base, d'une communication établie avec un mobile dans un système cellulaire multicouche de radiocommunications avec des mobiles sous la forme d'une pluralité de microcellules et une cellule parapluie ayant une couverture radioélectrique couvrant ladite pluralité de microcellules, lesdites microcellules et cellule parapluie étant associées à des stations de base respectives, dans lequel une unique fréquence balise est définie et associée à la station de base de la cellule parapluie, et comprenant les étapes de :
- réception par chacune de stations de base de microcellule adjacente à ladite première station de base de microcellule et associée à l'une respective de la pluralité de microcellules, d'un signal de canal montant de la communication établie entre le mobile et la première station de base de microcellule,
- sélection de l'une desdites stations de base, en ladite seconde station de base, comme définissant une couverture radioélectrique à laquelle appartient le mobile, en fonction de mesures respectives de niveau de réception dudit signal de canal montant, et
- émission par ladite première station de base de microcellule à destination dudit mobile dans un canal descendant correspondant audit canal montant, d'un message d'allocation identifiant un canal disponible dans ladite seconde station de base.

Un tel système, appliquant la transmission analogique et le multiplexage en fréquence, réutilise les fréquences de façon très espacée et ne peut convenir aux systèmes numériques où la réutilisation des fréquences est telle qu'une station de base de la cellule peut recevoir un mobile d'une cellule voisine exploitant une fréquence de la cellule plus fort qu'un mobile de la cellule ayant besoin d'un transfert, ce qui entraînerait une erreur de transfert et la perte d'une communication. La présente invention résoud ce problème et permet l'application du procédé de transfert connu à un réseau numérique.

Elle se caractérise en ce que la distinction entre deux canaux utilisant la même fréquence dans des cellules distinctes résulte de la différenciation de deux séquences distinctes respectives portées par les bursts dans ces deux canaux.

L'invention prévoit également qu'une communication avec un mobile puisse être transférée vers un canal de la cellule parapluie, par exemple dans le cas où le mobile se déplace vers une zone de couverture de la cellule parapluie non couverte par une microcellule. A cette fin, l'étape de sélection est fonction, en addition desdites mesures respectives de niveau de réception dudit message d'accès, d'une mesure de niveau de réception par le mobile d'un signal émis à ladite fréquence balise par ladite station de base de cellule parapluie.

Une station de base est également prévue par l'invention. La station de base est caractérisée en ce qu'elle n'émet pas de fréquence balise et en ce qu'elle comprend, en outre,
un récepteur pour recevoir des signaux émis, d'une part, entre des mobiles et la station de base de cellule parapluie dans un canal balise, et, d'autre part, entre des mobiles et des stations de base de microcellule dans des canaux de trafic.

Un équipement d'infrastructure pour la mise en oeuvre du procédé d'établissement d'un canal dédié comprend des moyens pour sélectionner une station de base avec laquelle doit être établie une communication avec un mobile, en fonction de mesures de niveau de réception, par les stations de base de microcellule, d'un message d'accès émis par le mobile, et, éventuellement, d'une mesure de niveau de réception par ladite station de base de cellule parapluie dudit message d'accès.

Un équipement d'infrastructure pour la mise en oeuvre du procédé de transfert comprend des moyens pour sélectionner une seconde station de base vers laquelle doit être transférée une communication établie avec une première station de base de microcellule, en fonction de mesures de niveau de réception, par les stations de base de microcellule voisines à ladite première station de base, du canal de trafic établi avec ladite première station de base, et, éventuellement, d'une mesure de niveau de réception par le mobile d'un signal émis à ladite fréquence balise par ladite station de base de cellule parapluie.

D'autres caractéristiques et avantages de la présente invention apparaîtront plus clairement à la lecture de la description suivante en référence aux dessins annexés correspondants dans lesquels :
- la figure 1 représente sous forme schématique un réseau de microcellules à cellule parapluie ;
- la figure 2 montre des étapes utiles à la mise en oeuvre selon l'invention d'un procédé d'établissement de canal de trafic entre un mobile et une station de base de microcellule, dans un réseau du type montré à la figure 1 et
- la figure 3 montre des étapes utiles à la mise en oeuvre selon l'invention, d'un procédé de transfert de microcellule à microcellule d'une communication établie entre un mobile et une station de base de microcellule, dans un réseau du type montré à la figure 1.

Comme mentionné dans le préambule de la description, la technique antérieure ne fournit pas de réalisation de réseau microcellulaire à cellule parapluie prévoyant le handover de microcellule à microcellule combiné avec le défaut d'existence d'une fréquence balise par microcellule.

Est désignée par fréquence balise une fréquence de porteuse émise de façon continue et destinée à véhiculer des canaux de contrôle communs. Ces canaux de contrôle communs sont par définition destinés à recevoir des messages de signalisation en provenance ou à destination pas uniquement d'un seul et unique mobile. Ils sont désignés par BCCH et CCCH dans le G.S.M. Le défaut d'existence d'une fréquence balise, ou fréquence BCCH en terminologie GSM, dans chaque microcellule évite en technique de saut de fréquence, de redéfinir systématiquement pour chaque adjonction d'une nouvelle station de base de microcellule, une nouvelle planification de réutilisation de fréquence visant à supprimer les interférences entre fréquences balises identiques dans des cellules voisines. Une fréquence balise est néanmoins prévue, selon l'invention, dans la cellule parapluie.

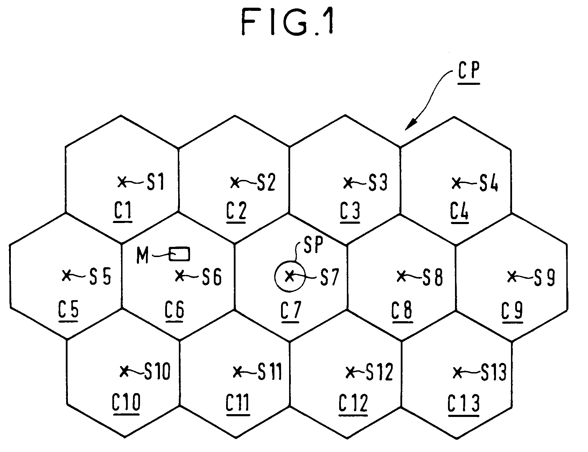

En référence à la figure 1, un réseau, ou système, microcellulaire à cellule parapluie comprend une pluralité de microcellules C1, C2, C3, ..., C12 et C13 et une cellule parapluie CP dont la couverture radioélectrique couvre chacune de ladite pluralité de microcellules. La couverture de cellule parapluie CP est représentée en trait discontinu dans cette figure 1. Les microcellules C1 à C13 et cellule parapluie CP, sont chacune associée à une station de base S1 à S13 et SP. En pratique, des zones géographiques peuvent être couvertes par la cellule parapluie CP sans être couvertes par une microcellule. Les microcellules ne sont donc pas nécessairement contiguës, et entre deux microcellules, une zone peut n'être couverte par aucune microcellule.

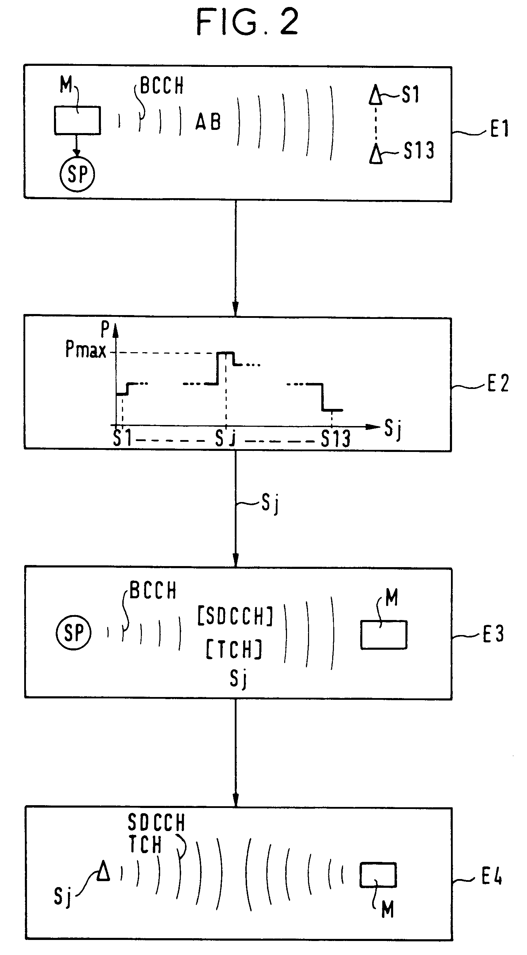

En référence à la figure 2, des étapes d'un procédé selon l'invention d'établissement d'un canal de trafic entre un mobile M et une station de base de microcellule Sj sont maintenant décrites. Par contraste avec le brevet américain cité dans le préambule de la description, le canal de trafic est de préférence établi directement entre la station de base de microcellule Sj et le mobile M, et aucun canal de trafic n'est préalablement établi temporairement entre ledit mobile et la station de base SP de la cellule parapluie CP. Les étapes représentées dans cette figure 2 concernent aussi bien un appel entrant qu'un appel sortant pour le mobile M. Il est rappelé que dans le cas d'un appel entrant, le mobile reçoit dans un canal d'appel véhiculé par le CCCH et émis par la station de base SP de cellule parapluie, un message d'appel. Ce canal d'appel est noté PCH pour Paging CHannel en terminologie anglo-saxonne.

Suite à la réception de ce message d'appel dans le cas de l'appel entrant, ou à l'initiative du mobile M dans le cas d'un appel sortant, le mobile émet, comme montré par l'étape E1, un message, ou burst, d'accès AB à destination de la station de base de cellule parapluie SP sur un canal montant portée par la fréquence balise, ou fréquence BCCH. Comme représenté schématiquement par cette étape E1, le message d'accès AB émis par le mobile M à destination de la station SP, est en outre reçu par les J=13 stations de base de microcellule S1 à S13. Les stations de base de microcellule S1 à S13 incluent chacune un récepteur additionnel destiné à "écouter" les messages d'accès émis par les mobiles sur la fréquence balise de la station de base SP de cellule parapluie. Pour chacun des J=13 signaux respectifs issus des 13 récepteurs additionnels des stations de base microcellule S1 à S13, peut-être mesuré un niveau de puissance de réception du message d'accès AB par chaque station de base de microcellule S1 à S13. Des niveaux de puissance de réception peuvent être mesurés nuls pour certaines stations de base de microcellule. L'étape E2 montre un diagramme cartésien du niveau de puissance de réception P du message d'accès AB en fonction de la station de base Sj, j variant de 1 à 13.

Selon cet exemple de la figure 2, la station Sj présente un niveau de puissance de réception maximal noté Pmax. Afin de confirmer la présence du mobile M sous la couverture de la microcellule Sj, ou en variante, il peut-être mesuré le niveau de qualité de réception du message AB par la microcellule Sj.

Cette étape E2, grâce à des mesures de niveau de puissance et niveau de qualité de réception du message AB par les différentes stations de base S1 à S13, vise à sélectionner l'une Sj de ces stations S1 à S13 comme définissant la microcellule Cj à laquelle appartient le mobile M à l'instant d'émission du message d'accès AB par le mobile. L'identité de cette station de base de microcellule sélectionnée Sj est alors transmise à la station de base de cellule parapluie SP.

Selon l'étape notée E3, la station de base de cellule parapluie SP émet alors dans un canal descendant de la fréquence balise BCCH un message d'allocation [SDCCH] ou [TCH] à destination du mobile M. Ce message [SDCCH] ou [TCH] identifie un canal dédié qui est disponible dans la station de base de microcellule sélectionnée Sj. Un canal dédié est un canal alloué à un échange de données entre un unique mobile M et une station de base.

Comme montré par l'étape E4, un canal de trafic TCH (Traffic CHannel) ou un canal de signalisation à faible débit SDCCH (Stand-Alone Dedicated Control CHannel) est alors établi entre la station sélectionnée Sj et le mobile M.

Ainsi le canal dédié TCH, ou SDCCH, est établi directement entre le mobile M et la station de base de microcellule Sj sans qu'un canal soit préalablement et temporairement établi entre ledit mobile et la station de base de cellule parapluie. Il apparaîtra évident à l'homme du métier que le message d'accès AB peut être remplacé par un quelconque message émis par le mobile lors de la phase d'établissement d'appel, pour une écoute par les stations de base de microcellule en vue de déterminer la microcellule à laquelle appartient le mobile M.

L'invention prévoit également qu'une communication avec un mobile puisse être établie dans un canal de la cellule parapluie, par exemple dans le cas où le mobile appartient à une zone de couverture de la cellule parapluie non couverte par une microcellule. Dans ce cas, la sélection selon l'étape E2 de la station de base avec laquelle est établie la communication est fonction, en addition des mesures respectives de niveau de réception du message d'accès AB par les stations de base de microcellule, d'une mesure de niveau de réception par ladite station de base de cellule parapluie de ce message d'accès. Le message AB est reçu par la station de base de cellule parapluie sur la fréquence balise et plus précisement dans le cadre du GSM, dans le canal CCCH porté par cette fréquence balise. Est sélectionnée celle parmi toutes les stations de base de microcellule et cellule parapluie qui reçoit le message d'accès AB avec un niveau de réception maximal.

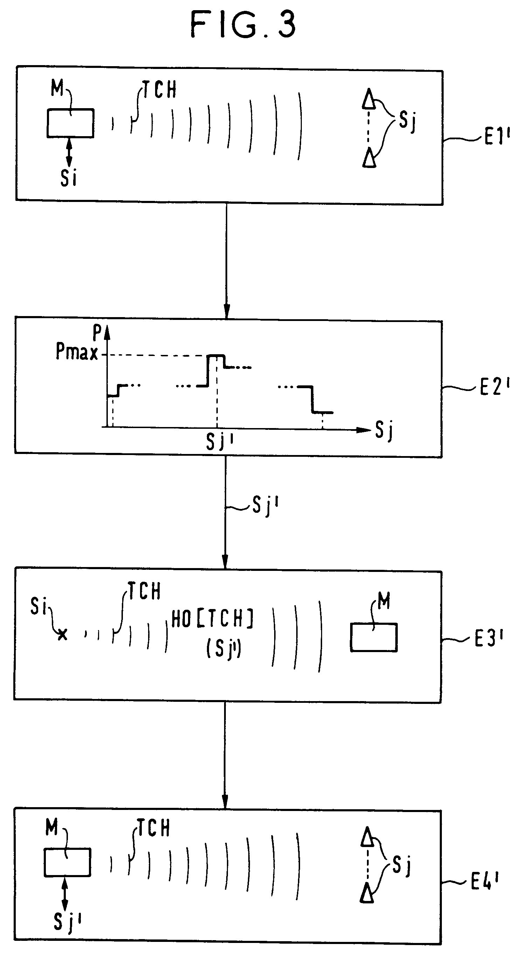

En référence à la figure 3, sont représentées des étapes selon l'invention de handover, ou transfert, de microcellule à microcellule d'une communication établie avec un mobile dans un réseau multicouche du type montré à la figure 1.

Initialement, comme représenté par l'étape E1', un canal de trafic, noté TCH, est établi entre le mobile M et une station de base de microcellule notée Si. Les stations de base de microcellule Sj adjacentes, ou voisines, à la station de base Si, comprennent chacune un récepteur additionnel destiné à écouter la composante montante d'un tel canal de trafic TCH établi entre le mobile M et la station Si. A partir de chacun des signaux respectifs issus des récepteurs additionnels des stations de base de microcellule adjacentes Sj, peut-être mesuré un niveau de puissance de réception du canal montant de trafic TCH par chaque station de base de microcellule Sj.

L'étape E2' montre un diagramme cartésien du niveau de puissance de réception P du canal TCH en fonction de la station de base Sj, j définissant l'indice des stations de base de microcellule voisines de la station de base Si. Selon l'exemple montré dans la figure 3, la station Sj' présente un niveau de puissance de réception maximal. Afin de valider la présence du mobile M sous la couverture radioélectrique de la microcellule Sj' peut-être mesuré le niveau de qualité de réception du canal TCH établi entre le mobile M et la station Si, par la station Sj'. Par ailleurs, la distinction entre deux canaux utilisant la même fréquence dans des cellules distinctes résulte de la différenciation qui est faite, par exemple dans le GSM, entre ces deux canaux au moyen de deux séquences distinctes respectives (training sequence) portées par les bursts dans ces deux canaux. Ainsi selon cette étape E2', grâce à des mesures de niveau de puissance et/ou niveau de qualité de réception du canal de trafic TCH établi, par les différentes stations de base Sj, est sélectionnée l'une Sj' de ces stations Sj comme définissant la microcellule Cj' à laquelle appartient le mobile et vers laquelle doit être transférée la communication établie. L'identité de cette station de base de microcellule sélectionnée Sj' est alors transmise à la station de base de microcellule Si avec laquelle est établie la communication sur le canal TCH courant.

Comme montré par l'étape E3', la station Si émet alors de manière connue dans le canal descendant de trafic TCH un message d'activation de transfert de microcellule à microcellule de la communication, noté HO[TCH]. Ce message HO [TCH] inclut en outre l'identité d'un canal disponible dans la station de base de microcellule sélectionnée Sj'. En réponse à cette phase de handover, et comme schématisé par l'étape E4', un nouveau canal de trafic TCH est établi entre le mobile M et la station Sj'. Ce canal de trafic est alors écouté par les récepteurs dans les stations de base de microcellule Sj, distinctes de et adjacentes à la station Sj'. Dans ce qui précède en ce qui concerne le transfert de cellule à cellule, le canal TCH peut être remplacé par un canal SDCCH.

L'invention prévoit également qu'une communication avec un mobile puisse être transférée dans un canal de la cellule parapluie, par exemple dans le cas où le mobile progresse vers une zone de couverture de la cellule parapluie non couverte par une microcellule. Dans ce cas, la sélection selon l'étape E2' de la station de base vers laquelle est transférée la communication est fonction, en addition des mesures respectives de niveau de réception du canal montant TCH par les stations de base de microcellule, d'un niveau de puissance du signal de fréquence balise mesuré par le mobile M et retransmis vers le réseau mobile. Il est rappellé que dans le GSM, un mobile retransmet des messages de mesure de puissance à destination de la station de base avec laquelle il est connecté, dans un canal, dit lent, SACCH qui est associé à un canal dédié, typiquement trafic. Selon l'invention, dans le cas où une communication est établie avec le mobile via une une station de base de microcellule, l'information de mesure de puissance renvoyée par le mobile à destination du réseau, via ladite station de base de microcellule, est relative au niveau de puissance du signal de fréquence balise émis par la station de base de cellule parapluie. Cette information de mesure de puissance retransmise par le mobile vers le réseau, et les mesures respectives de niveau de réception du canal montant TCH par les stations de base de microcellule, permettent de sélectionner celle des stations de base de microcellule et cellule parapluie vers laquelle doit être transférée la communication établie.

Comme montré par les étapes E3 et E3' dans la figure 2 et 3, une station de base de microcellule ou cellule parapluie pour la mise en oeuvre du procédé selon l'invention doit inclure des moyens pour recevoir à partir d'un équipement d'infrastructure dans le réseau mobile un message identifiant un canal [SDCCH], [TCH], HO[TCH]. L'information dans le message identifiant ce canal est retransmis à destination du mobile M dans un canal établi. Dans le cas de l'établissement d'un appel, ce canal établi est le BCCH. Dans le cas d'un handover, ce canal établi est le canal de trafic TCH dans lequel la communication est actuellement transmise. En outre, une station de base de microcellule selon l'invention inclut un récepteur pour recevoir les signaux émis, d'une part, entre des mobiles M et la station de base parapluie SP dans un canal balise, ou canal BCCH afin de recevoir les bursts AB, et, d'autre part, entre les mobiles et les autres stations de base de microcellule afin d'écouter les canaux de trafic TCH en prévision des changements de cellule.

L'homme du métier conviendra que le transfert d'une communication établie avec un mobile peut être opéré à partir de la cellule parapluie CP vers une microcellule. La solution fournie est telle que suit. Chaque microcellule inclut un récepteur additionnel pour recevoir et mesurer un niveau de puissance dans le canal de trafic établie entre le mobile et la cellule parapluie. Des mesures de niveau de puissance et/ou qualité de ce canal de trafic peuvent ainsi être remontées par toutes les microcellules vers un équipement d'infrastructure du réseau. Cet équipement d'infrastructure sélectionne celle des microcellules qui reçoit le signal de la communication véhiculée dans le canal de trafic de cellule parapluie, avec une puissance maximale. Cette microcellule sélectionnée est la microcellule la plus proche du mobile, et la communication est commutée du canal de trafic de la cellule parapluie vers un canal de trafic associé à cette microcellule sélectionnée. Cette transfert de cellule parapluie vers microcellule de la communication est précédée par une phase d'échange de messages de signalisation entre la station de base de cellule parapluie et le mobile à travers le canal de trafic afin de signaler au mobile le nouveau canal de microcellule qui est alloué à la communication.

En outre, l'homme du métier appréciera que, conformément au GSM, un handover de cellule à cellule peut être opéré de manière conventionnelle dans le cas où un mobile quitte la couverture de la cellule parapluie CP. Ce handover résulte de l'écoute par ledit mobile des fréquences balises de la cellule parapluie et de cellule(s) voisine(s) (non représentée(s)). En outre, il conviendra de noter qu'un équipement d'infrastructure, pouvant être un contrôleur de station de base, joue un rôle important dans le cadre de l'invention. D'une part, l'équipement d'infrastructure comprend des moyens pour sélectionner une station de base avec laquelle doit être établie une communication avec un mobile, en fonction de mesures de niveau de réception, par les stations de base de microcellule, d'un message d'accès émis par le mobile. Selon la variante du procédé de l'invention prévoyant qu'une communication peut être établie dans un canal de la station de base de cellule parapluie, les moyens pour sélectionner sélectionnent la station de base avec laquelle doit être établie une communication avec un mobile, en fonction non seulement de mesures de niveau de réception par les stations de base de microcellule d'un message d'accès émis par le mobile, mais aussi d'une mesure de niveau de réception par ladite station de base de cellule parapluie dudit message d'accès.

D'autre part, cet équipement d'infrastructure comprend des moyens pour sélectionner une seconde station de base vers laquelle doit être transférée une communication établie avec une première station de base de microcellule, en fonction de mesures de niveaux de réception, par les stations de base de microcellule voisines à ladite première station de base, du canal de trafic établi avec ladite première station de base. Dans le cas de la variante prévoyant que la communication peut être transférée vers un canal de la cellule parapluie, les moyens pour sélectionner sélectionnent la seconde station de base en fonction non seulement de mesures de niveau de réception par les stations de base de microcellule voisines à ladite première station de base, du canal de trafic établi avec ladite première station de base, mais aussi d'une mesure de niveau de réception par le mobile d'un signal émis à ladite fréquence balise par ladite station de base de cellule parapluie.

## Revendications

**1 -** Procédé de transfert d'une première station de base de microcellule (Si) vers une seconde station de base (Sj', SP), d'une communication établie avec un mobile (M) dans un système cellulaire multicouche de radiocommunications avec des mobiles sous la forme d'une pluralité de microcellules (C1,... C13) et une cellule parapluie (CP) ayant une couverture radioélectrique couvrant ladite pluralité de microcellules (C1, . . .C13) , lesdites microcellules et cellule parapluie étant associées à des stations de base respectives, étant définie et associée à la station de base (SP) de la cellule parapluie (CP), et comprenant les étapes de :
- réception (E1') par chacune de stations de base de microcellule adjacente à ladite première station de base de microcellule et associée à l'une respective de la pluralité de microcellules, d'un signal de canal montant (TCH) de la communication établie entre le mobile (M) et la première station de base de microcellule (Si),
- sélection (E2') de l'une (Sj', SP) desdites stations de base, en ladite seconde station de base, comme définissant une couverture radioélectrique à laquelle appartient le mobile (M), en fonction de mesures respectives de niveau de réception dudit signal de canal montant, et
- émission (E3') par ladite première station de base de microcellule (Si) à destination dudit mobile (M) dans un canal descendant correspondant audit canal montant, d'un message d'allocation (HO[TCH]) identifiant un canal (TCH) disponible dans ladite seconde station de base (Sj', SP), caractérisé en ce que la distinction entre deux canaux utilisant la même fréquence dans des cellules distinctes résulte de la différenciation de deux séquences distinctes respectives portées par les bursts dans ces deux canaux.

**2 -** Procédé conforme à la revendication 1, selon lequel ladite station de base sélectionnée peut être la station de base de cellule parapluie, caractérisé en ce que ladite étape de sélection (E2') est fonction, en addition desdites mesures respectives de niveau de réception dudit message d'accès (AB), d'une mesure de niveau de réception par le mobile (M) d'un signal émis à ladite fréquence balise par ladite station de base (SP) de cellule parapluie (CP).

**3 -** Station de base de microcellule dans un réseau cellulaire de radiocommunications avec des mobiles pour la mise en oeuvre du procédé conforme à la revendication 1 ou 2 caractérisée en ce qu'elle n'émet pas de fréquence balise et en ce qu'elle comprend, en outre,
un récepteur pour recevoir des signaux émis, d'une part, entre des mobiles (M) et la station de base de cellule parapluie (SP) dans un canal balise (BCCH), et, d'autre part, entre des mobiles et des stations de base de microcellule dans des canaux de trafic (TCH).

**4 -** Equipement d'infrastructure pour la mise en oeuvre du procédé conforme à la revendication 1, caractérisé en qu'il comprend des moyens pour sélectionner une seconde station de base vers laquelle doit être transférée une communication établie avec une première station de base de microcellule, en fonction de mesures de niveau de réception, par les stations de base de microcellule voisines à ladite première station de base, du canal de trafic établi avec ladite première station de base.

**5 -** Equipement d'infrastructure conforme à la revendication 4 pour la mise en oeuvre du procédé selon la revendication 2, caractérisé en ce que les moyens pour sélectionner sélectionnent ladite seconde station de base en fonction, en outre, d'une mesure de niveau de réception par le mobile (M) d'un signal émis à ladite fréquence balise par ladite station de base de cellule parapluie.
